# EUROPEAN PATENT APPLICATION

(11) **EP 4 557 722 A1**
(43) Date of publication of application: **21.05.2025**
(21) Application number: 23875036.8
(22) Date of filing: 08.08.2023
(51) Int. Cl.: H04N 9/31, H04N 21/485

(54) **ELECTRONIC DEVICE AND METHOD FOR PROVIDING UI THEREOF**

(30) Priority: 05.10.2022 KR 20220127011
(71) Applicant: Samsung Electronics Co., Ltd., Suwon-si, Gyeonggi-do 16677 (KR)
(72) Inventor: SEO, Jangwon, Suwon-si Gyeonggi-do 16677 (KR)
(74) Representative: Appleyard Lees IP LLP
(86) International application number: PCT/KR2023/011627
(87) International publication number: WO 2024/075966

(57) **Abstract**

An electronic device is disclosed. The electronic device may include an image projection part, a sensor, a memory for storing at least one instruction, and at least one processor connected to the image projection part, the sensor, and the memory to control the electronic device. The at least one processor may, by executing the at least one instruction, identify a screen size based on a distance to a projection surface acquired through the sensor, identify a UI mode corresponding to the identified screen size among a plurality of UI modes, and control the image projection part to project a UI screen corresponding to the identified UI mode. The plurality of UI modes may differ in at least one of the number of UI elements provided on the UI screen, the number of types of UI elements, or a range of information provided.

## Description

### [Technical Field]

The disclosure relates to an electronic device and a method for providing a UI thereof, and more particularly, to an electronic device that projects an image on a projection surface, and a method for providing a UI thereof.

### [Background Art]

Recently, as electronic technologies and optical technologies have developed, various projectors are being utilized. A projector may refer, for example, to an electronic device that projects light on a projection surface and makes an image formed on the projection surface.

In the case of projecting an image using a projector, the screen size may be changed according to the projection distance. According to an embodiment, in case a projected image is a UI screen including various UI elements, it may be provided while only its size is changed.

### [Technical Solution]

An electronic device according to an example embodiment of the disclosure includes an image projection part, a sensor, memory storing at least one instruction, and at least one processor that is connected with the image projection part, the sensor, and the memory, and controls the electronic device, wherein the at least one processor may, by executing the at least one instruction, identify a screen size based on a distance to a projection surface obtained through the sensor, identify a user interface (UI) mode corresponding to the identified screen size among a plurality of UI modes, and control the image projection part to project a UI screen corresponding to the identified UI mode, wherein the plurality of UI modes may be different in at least one of a number of UI elements provided on the UI screen, a number of types of UI elements, or a range of provided information.

According to an example embodiment, the at least one processor may identify the screen size based on the distance to the projection surface and an instruction for adjusting the screen size. The instruction for adjusting the screen size may be a user instruction for enlarging or reducing the screen size.

According to an embodiment, the at least one processor may, based on the screen size being smaller than a first threshold size, control the image projection part to project a UI screen corresponding to a first UI mode among the plurality of UI modes, and based on the screen size being larger than or equal to the first threshold size and smaller than a second threshold size, control the image projection part to project a UI screen corresponding to a second UI mode among the plurality of UI modes, and based on the screen size being larger than or equal to the second threshold size, control the image projection part to project a UI screen corresponding to a third UI mode among the plurality of UI modes.

According to an example embodiment, the number of UI elements provided in the second UI mode may be more than the number of UI elements provided in the first UI mode and fewer than the number of UI elements provided in the third UI mode, and a range of information provided in the second UI mode may be more enlarged than a range of information provided in the first UI mode and may be more reduced than a range of information provided in the third UI mode.

According to an example embodiment, the UI screens provided in the second UI mode and the third UI mode may include content promotion information that is not included in the UI screen provided in the first UI mode, and the UI screen provided in the third UI mode may further include a live content image and information related to the image that are not provided in the first UI mode and the second UI mode.

According to an example embodiment, the UI screens provided in the first UI mode and the second UI mode may include only icon information corresponding to side menus, and the UI screen provided in the third UI mode may include icon information corresponding to the side menus and menu titles.

According to an example embodiment, the number of types of UI elements provided in the second UI mode may be more than the number of types of UI elements provided in the first UI mode and fewer than the number of types of UI elements provided in the third UI mode.

According to an example embodiment, the at least one processor may provide any one of a UI screen corresponding to a media home, a UI screen corresponding to a game home, a UI screen corresponding to an ambient home, or a UI screen corresponding to a third party home, and based on characteristics of UI screens corresponding to each home, identify at least one of the number of the UI elements provided in the UI screens corresponding to the plurality of UI modes, the number of the types of the UI elements, or the range of the provided information to be different.

According to an example embodiment, at least one processor may identify priorities of a plurality of types of UI elements of UI screens and priorities of provided information, and render the UI screens corresponding to each of the plurality of UI modes differently based on the identified priorities and provide the screens.

According to an example embodiment, the at least one processor may, based on identifying a UI mode corresponding to the identified screen size among the plurality of UI modes, identify an arrangement location of at least one of the UI elements or the information corresponding to the identified UI mode based on an aspect ratio of the screen, and control the image projection part to project a UI screen corresponding to the identified UI mode based on the identified arrangement location.

A method of providing a UI of an electronic device that projects an image on a projection surface according to an example embodiment of the disclosure may include: identifying a screen size based on a distance to the projection surface, identifying a UI mode corresponding to the identified screen size among a plurality of UI modes, and projecting a UI screen corresponding to the identified UI mode on the projection surface, wherein the plurality of UI modes may be different in at least one of the number of UI elements provided on the UI screen, the number of types of UI elements, or a range of provided information.

In a non-transitory computer-readable medium storing computer instructions which, when executed by a processor of an electronic device that projects an image on a projection surface, make the electronic device perform operations according to an embodiment of the disclosure, the operations may include the steps of identifying a screen size based on a distance to the projection surface, identifying a UI mode corresponding to the identified screen size among a plurality of UI modes, and projecting a UI screen corresponding to the identified UI mode on the projection surface. Here, the plurality of UI modes may be different in at least one of the number of UI elements provided on the UI screen, the number of types of UI elements, or a range of provided information.

### [Description of Drawings]

FIG. 1 is a diagram illustrating an implementation example of an electronic device according to various embodiments;
FIG. 2A is a block diagram illustrating an example configuration of an electronic device according to various embodiments;
FIG. 2B is a block diagram illustrating an example configuration of an electronic device according to various embodiments;
FIG. 3 is a flowchart illustrating an example method of providing a UI screen according to various embodiments;
FIG. 4 is a flowchart illustrating a example method of providing a UI screen according to various embodiments;
FIG. 5 is a flowchart illustrating an example method of providing a UI screen according to various embodiments;
FIG. 6 is a diagram illustrating an example method by which a UI mode is determined according to a projection distance according to various embodiments;
FIG. 7 is a diagram illustrating an example method by which a UI mode is determined according to a projection distance and an adjustment value of a screen size according to various embodiments;
FIGS. 8A, 8B and 8C are diagrams illustrating a plurality of UI modes corresponding to a UI home of a first type according to various embodiments;
FIGS. 9A, 9B and 9C are diagrams illustrating a plurality of UI modes corresponding to a UI home of a second type according to various embodiments;
FIGS. 10A, 10B and 10C are diagrams illustrating a plurality of UI modes corresponding to a UI home of a third type according to various embodiments;
FIGS. 11A, 11B and 11C are diagrams illustrating a plurality of UI modes corresponding to a UI home of a fourth type according to various embodiments; and
FIG. 12 is a flowchart illustrating an example method of providing a UI according to various embodiments.

### [Mode for Invention]

Hereinafter, the disclosure will be described in greater detail with reference to the accompanying drawings.

Terms used in this disclosure will be described briefly, and then the disclosure will be described in greater detail.

As terms used in the disclosure, general terms that are currently used widely were selected as far as possible, in consideration of the functions described in the disclosure. However, the terms may vary depending on the intention of those skilled in the art who work in the pertinent field or previous court decisions, or emergence of new technologies, etc. In some cases, there may be terms that were designated by the applicant on his own, and in such cases, the meaning of the terms will be described in detail in the relevant descriptions in the disclosure. Accordingly, the terms used in the disclosure should be defined based on the meaning of the terms and the overall content of the disclosure, but not just based on the names of the terms.

In this disclosure, terms such as "have," "may have," "include" and "may include" should be construed as denoting that there are such characteristics (e.g.: elements such as numerical values, functions, operations, and components), and the terms are not intended to exclude the existence of additional characteristics.

The expression "at least one of A and/or B" may refer to any one of "A" or "B" or "A and B."

The expressions "first," "second," and the like used in this disclosure may be used to describe various elements regardless of any order and/or degree of importance. Further, such expressions are used only to distinguish one element from another element, and are not intended to limit the elements.

The description in the disclosure that one element (e.g.: a first element) is "(operatively or communicatively) coupled with/to" or "connected to" another element (e.g.: a second element) should be interpreted to include both the case where the one element is directly coupled to the another element, and the case where the one element is coupled to the another element through still another element (e.g.: a third element).

The expression "configured to" used in the disclosure may be interchangeably used with other expressions such as "suitable for," "having the capacity to," "designed to," "adapted to," "made to," and "capable of," depending on cases. The term "configured to" may not necessarily refer, for example, to there being a device is "specifically designed to" in terms of hardware.

Singular expressions include plural expressions, as long as they not clearly different in context. In the disclosure, terms such as "include" and "consist of' should be construed as designating that there are such characteristics, numbers, steps, operations, elements, components, or a combination thereof in the disclosure, but not as excluding in advance the existence or possibility of adding one or more of other characteristics, numbers, steps, operations, elements, components, or a combination thereof.

In the disclosure, "a module" or "a part" performs at least one function or operation, and may be implemented as hardware or software, or as a combination of hardware and software. In addition, a plurality of "modules" or "parts" may be integrated into at least one module and implemented as at least one processor (not shown), except "a module" or "a part" that needs to be implemented as specific hardware.

Hereinafter, various example embodiments of the disclosure will be described in greater detail with reference to the accompanying drawings.

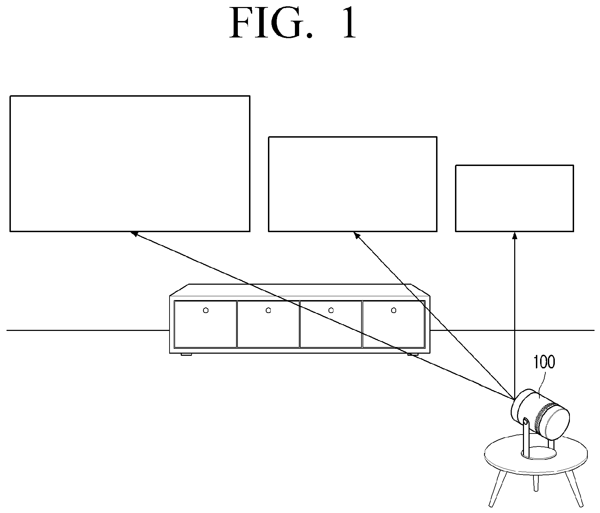

FIG. 1 is a diagram illustrating an example implementation example of an electronic device according to various embodiments.

An electronic device 100 according to an embodiment of the disclosure may be equipped with a function of projecting an image, r.g., a projector function. For example, the electronic device 100 may be a projector device that projects an image on a wall or a projection surface, and the projector device may be an LCD projector or a digital light processing (DLP) type projector that uses a digital micromirror device (DMD).

The electronic device 100 may be implemented as a display device for a household or an industrial use, an illumination device used in everyday lives, an audio device including an audio module, a portable communication device (e.g.: a smartphone), a computer device, a portable multimedia device, a wearable device, or a home appliance, etc. However, the electronic device 100 is not limited to the aforementioned devices, and the electronic device 100 may be implemented as an electronic device 100 equipped with two or more functions of the aforementioned devices. For example, according to a manipulation of a processor, a projector function of the electronic device 100 is turned off, and an illumination function or a speaker function is turned on, and the electronic device 100 may be utilized as a display device, an illumination device, or an audio device. Also, the electronic device 100 may include a microphone or a communication device, and may be utilized as an AI speaker.

As illustrated in FIG. 1, the size of a screen projected on a projection surface may vary according to the distance between the electronic device 100 and the projection surface. The screen size may vary according to an instruction for adjusting the screen size of a user, e.g., an instruction for enlarging/reducing the screen (or an instruction for zoom-in/zoom-out of the screen).

According to an embodiment, in case an image projected on a projection surface is a UI screen including various kinds of information such as a plurality of UI elements, content information, menu items, etc., usability may be degraded if the same UI screen is provided depending on the screen size. The reason for this is, for example, in the case of a UI screen that is too small, it may be difficult to identify the included information, and in the case of a UI screen that is too big, it may be difficult for the user to secure a clear view.

Accordingly, hereinafter, various embodiments wherein a user's UX experience can be improved by providing UI screens of different modes according to screen sizes of projection surfaces will be explained.

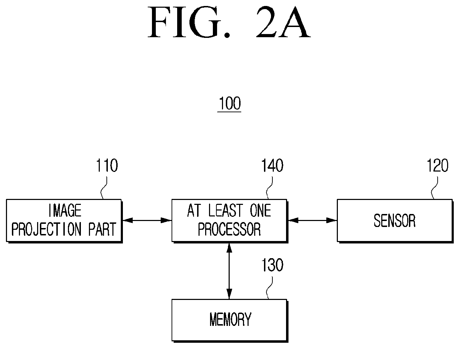

FIG. 2A is a block diagram illustrating an example configuration of an electronic device according to various embodiments.

According to FIG. 2A, the electronic device 100 may include an image projection part 110, a sensor 120, memory 130, and at least one processor 140.

The image projection part 110 may perform a function of projecting light for expressing an image to the outside and outputting an image on a projection surface. Here, the projection surface may be a part of a physical space wherein an image is output or a separate projection surface. The image projection part 110 may include various detailed components such as at least one light source among a lamp, LED, and laser, a projection lens, a reflector, etc.

The image projection part 110 may project an image by one of various projection methods (e.g., a cathode-ray tube (CRT) method, a liquid crystal display (LCD) method, a digital light processing (DLP) method, a laser method, etc.). The image projection part 110 may include at least one light source.

The image projection part 110 may output an image in a screen ratio of 4:3, a screen ratio of 5:4, and a wide screen ratio of 16:9 according to the use of the electronic device 100 or the user's setting, etc., and output an image in various resolutions such as WVGA (854*480), SVGA (800*600), XGA (1024*768), WXGA (1280*720), WXGA (1280*800), SXGA (1280*1024), UXGA (1600*1200), Full HD (1920*1080), etc. according to screen ratios.

The image projection part 110 may perform various functions for adjusting a projection image by control by the processor 140. For example, the image projection part 110 may perform a zoom-in/out function, a lens shift function, etc.

The image projection part 110 may analyze the ambient environment and a projection environment automatically without a user input, and perform zoom/keystone/focus functions. Specifically, the image projection part 110 may provide zoom/keystone/focus functions automatically based on the distance between the electronic device 100 and the projection surface, information on the space wherein the electronic device 100 is currently located, information on the ambient light amount, etc.

The sensor 120 may include various types of sensors such as an image sensor, a touch sensor, a proximity sensor, an acceleration sensor, a geomagnetic sensor, a gyro sensor, a pressure sensor, a position sensor, etc. In particular, the sensor 120 may include a distance sensor. The distance sensor is a component for detecting a distance to a projection surface. The distance sensor may be implemented in various types such as a Time of Flight (ToF) sensor, an ultrasonic sensor, an infrared sensor, a LiDAR sensor, a radar sensor, a photodiode sensor, etc.

The memory 130 may store data necessary for various embodiments. The memory 130 may be implemented in a form of memory embedded in the electronic device 100, or implemented in a form of memory that can be attached to or detached from the electronic device 100 according to the use of stored data. For example, in the case of data for driving the electronic device 100, the data may be stored in memory embedded in the electronic device 100, and in the case of data for an extended function of the electronic device 100, the data may be stored in memory that can be attached to or detached from the electronic device 100. In the case of memory embedded in the electronic device 100, the memory may be implemented as at least one of volatile memory (e.g.: dynamic RAM (DRAM), static RAM (SRAM), or synchronous dynamic RAM (SDRAM), etc.) or non-volatile memory (e.g.: one time programmable ROM (OTPROM), programmable ROM (PROM), erasable and programmable ROM (EPROM), electrically erasable and programmable ROM (EEPROM), mask ROM, flash ROM, flash memory (e.g.: NAND flash or NOR flash, etc.), a hard drive, or a solid state drive (SSD)). Also, in the case of memory that can be attached to or detached from the electronic device 100, the memory may be implemented in forms such as a memory card (e.g., compact flash (CF), secure digital (SD), micro secure digital (Micro-SD), mini secure digital (Mini-SD), extreme digital (xD), a multi-media card (MMC), etc.) and external memory that can be connected to a USB port (e.g., a USB memory), etc.

The at least one processor 140 controls the overall operations of the electronic device 100. For example, the at least one processor 140 may be connected with each component of the electronic device 100, and control the overall operations of the electronic device 100. For example, the at least one processor 140 may be electrically connected with the image projection part 110, the sensor 120, and the memory 130, and control the overall operations of the electronic device 100. The at least one processor 140 may include one or a plurality of processors.

The at least one processor 140 may perform the operations of the electronic device 100 according to the various embodiments by executing the at least one instruction stored in the memory 130.

The at least one processor 140 may include one or more of a central processing unit (CPU), a graphics processing unit (GPU), an accelerated processing unit (APU), a many integrated core (MIC), a digital signal processor (DSP), a neural processing unit (NPU), a hardware accelerator, or a machine learning accelerator. The at least one processor 140 may control one or a random combination of the other components of the electronic device 100, and perform an operation related to communication or data processing. Also, the at least one processor 140 may execute one or more programs or instructions stored in the memory 130. For example, the at least one processor 140 may perform the method according to an embodiment of the disclosure by executing the at least one instruction stored in the memory 130.

In case the method according to an embodiment of the disclosure includes a plurality of operations, the plurality of operations may be performed by one processor, or performed by a plurality of processors. For example, when a first operation, a second operation, and a third operation are performed by the method according to an embodiment, all of the first operation, the second operation, and the third operation may be performed by a first processor, or the first operation and the second operation may be performed by the first processor (e.g., a generic-purpose processor), and the third operation may be performed by a second processor (e.g., an artificial intelligence-dedicated processor).

The at least one processor 140 may be implemented as a single core processor including one core, or may be implemented as one or more multicore processors including a plurality of cores (e.g., multicores of the same kind or multicores of different kinds). In case the at least one processor 140 is implemented as multicore processors, each of the plurality of cores included in the multicore processors may include internal memory of the processor such as cache memory, on-chip memory, etc., and a common cache shared by the plurality of cores may be included in the multicore processors. Also, each of the plurality of cores (or some of the plurality of cores) included in the multicore processors may independently read a program instruction for implementing the method according to an embodiment of the disclosure and perform the instruction, or the plurality of entire cores (or some of the cores) may be linked with one another, and read a program instruction for implementing the method according to an embodiment of the disclosure and perform the instruction.

In case the method according to an embodiment of the disclosure includes a plurality of operations, the plurality of operations may be performed by one core among the plurality of cores included in the multicore processors, or they may be performed by the plurality of cores. For example, when the first operation, the second operation, and the third operation are performed by the method according to an embodiment, all of the first operation, the second operation, and the third operation may be performed by a first core included in the multicore processors, or the first operation and the second operation may be performed by the first core included in the multicore processors, and the third operation may be performed by a second core included in the multicore processors.

In various embodiments of the disclosure, the processor may refer, for example, a system on chip (SoC) wherein at least one processor and other electronic components are integrated, a single core processor, a multicore processor, or a core included in the single core processor or the multicore processor. Also, here, the core may be implemented as a CPU, a GPU, an APU, a MIC, a DSP, an NPU, a hardware accelerator, or a machine learning accelerator, etc., but the disclosure is not limited thereto. Hereinafter, the at least one processor 140 will be referred to as the processor 140, for the convenience of explanation.

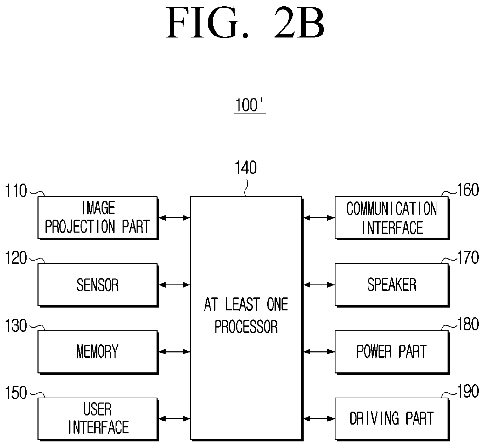

FIG. 2B is a block diagram illustrating an example configuration of an electronic device according to various embodiments.

According to FIG. 2B, the electronic device 100' may include an image projection part 110, a sensor 120, memory 130, at least one processor 140, a user interface 150, a communication interface 160, a speaker 170, a power part 180, and a driving part 190. Among the components illustrated in FIG. 2B, regarding components that overlap with the components illustrated in FIG. 2A, detailed explanation will be omitted.

The user interface 150 may be implemented as a device such as a button, a touch pad, a mouse, and a keyboard, or may be implemented as a touch screen that can perform the aforementioned display function and a manipulation input function together, etc.

The communication interface 160 can obviously be implemented as various interfaces depending on implementation examples of the electronic device 100'. For example, the communication interface 160 may perform communication with an external device, an external storage medium (e.g., a USB memory), an external server (e.g., a webhard), etc. through communication methods such as Bluetooth, AP-based Wi-Fi (Wi-Fi, a wireless LAN network), Zigbee, a wired/wireless local area network (LAN), a wide area network (WAN), an Ethernet, the IEEE 1394, a high-definition multimedia interface (HDMI), a universal serial bus (USB), a mobile high-definition link (MHL), the Audio Engineering Society/European Broadcasting Union (AES/EBU), Optical, Coaxial, etc. For example, the communication interface 160 may perform communication with a user terminal 200 and/or a remote control 300 through communication methods such as Wi-Fi communication, Bluetooth communication, infrared communication, etc., and receive a user instruction.

The speaker 170 may be a component that outputs not only various kinds of audio data but also various kinds of notification sounds or voice messages, etc. The processor 140 may control the speaker 170 to output information corresponding to UI screens according to various embodiments of the disclosure or various kinds of notifications in audio forms.

The power part 180 may receive power from the outside, and supply power to the components included in the electronic device 100'. The power part 180 may receive power through various methods. For example, the power part 180 may receive power using a connector, a DC power code, and a USB power code, or receive power using a wireless charging method, an internal battery, an external battery, etc.

The driving part 190 may drive at least one hardware component included in the electronic device 100'. The driving part 190 may generate physical force, and transmit the force to the at least one hardware component included in the electronic device 100'. The driving part 190 may generate driving power for a moving operation of the hardware component included in the electronic device 100' (e.g., moving of the electronic device 100') or a rotating operation of a component (e.g., rotation of the projection lens). The driving part 190 may adjust a projection direction (or a projection angle) of the image projection part 110. Also, the driving part 190 may move the location of the electronic device 100'. For example, the driving part 190 may move the location of the electronic device 100' using a motor.

Other than the above, the electronic device 100' may include a camera (not shown), a microphone (not shown), etc. depending on implementation examples.

The camera (not shown) may be turned on according to a predetermined event and perform photographing. The camera (not shown) may convert a photographed image into an electric signal, and generate image data based on the converted signal. For example, a subject may be converted into an electric image signal through a semiconductor optical element (a charge coupled device (CCD)), and the image signal converted as such may be amplified and converted into a digital signal, and then go through signal processing.

The microphone (not shown) is a component for receiving input of a user voice or other sounds, and converting them into audio data. However, according to an embodiment, the electronic device 100' may receive a user voice that was input through an external device through the communication interface 160.

The electronic device 100' may additionally include a speaker, a tuner, and a demodulator depending on implementation examples.

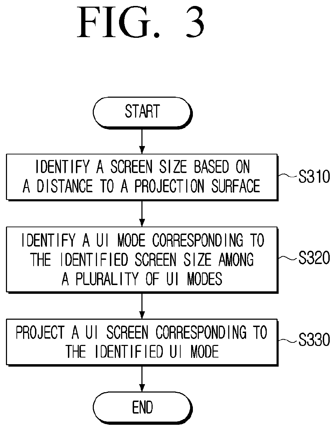

FIG. 3 is a flowchart illustrating an example method of providing a UI screen according to various embodiments.

According to the embodiment illustrated in FIG. 3, the processor 140 may identify a screen size based on a distance to a projection surface obtained through the sensor 120 in the step S310.

Thg processor 140 may identify a UI mode corresponding to the identified screen size among a plurality of UI modes in the step S320. Here, the plurality of UI modes may be modes that are different in at least one of the number of UI elements provided on the UI screen, the number of types of UI elements, or a range of provided information.

According to an embodiment, the plurality of UI modes may include a first UI mode, a second UI mode, and a third UI mode. For example, a small screen mode, a medium screen mode, and a big screen mode may be provided. However, this is merely an example, and the number of the UI modes may be fewer than or more than three.

The processor 140 may control the image projection part 110 to project a UI screen corresponding to the identified UI mode in the step S330.

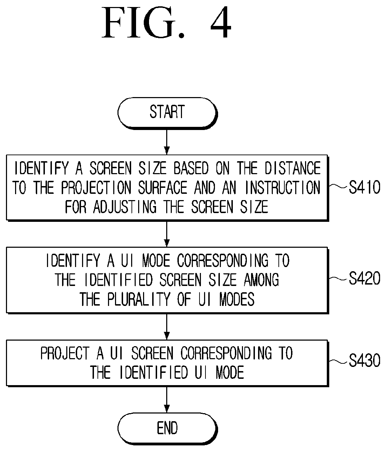

FIG. 4 is a flowchart illustrating an example method of providing a UI screen according to various embodiments.

According to the embodiment illustrated in FIG. 4, the processor 140 may identify a screen size based on a distance to a projection surface obtained through the sensor 120 and an instruction for adjusting the screen size in the step S410. Here, the instruction for adjusting the screen size may be a user instruction for enlarging or reducing the screen size.

For example, if a screen size designated as a default according to a distance to a projection surface is 100%, the screen size may be adjusted like 50%, 75%, 125%, 150%, etc. according to an instruction for adjusting the screen size. It will be apparent that an adjusted size can be changed to have continuous values in a reduced direction and/or an enlarged direction based on 100%.

The processor 140 may identify a UI mode corresponding to the identified screen size among a plurality of UI modes in the step S420. The plurality of UI modes may be modes that are different in at least one of the number of UI elements provided, the number of types of UI elements, or a range of provided information. According to an embodiment, the plurality of UI modes may include a first UI mode, a second UI mode, and a third UI mode, but the disclosure is not necessarily limited thereto. However, hereinafter, for the convenience of explanation, explanation will be described based on the assumption that three types of UI modes, e.g., a small screen mode, a medium screen mode, and a big screen mode are provided.

The processor 140 may control the image projection part 110 to project a UI screen corresponding to the identified UI mode in the step S430.

According to an embodiment, the processor 140 may identify priorities of different types of UI elements of UI screens and/or priorities of provided information, and render the UI screens corresponding to each of the plurality of UI modes differently based on the identified priorities and provide the screens. For example, priorities for different types of UI elements, and priorities for different types of information may be set in advance. Here, the different types of UI elements may refer, for example, to UI elements corresponding to different types of contents and/or menus. Also, the different types of information may refer, for example, to the depths of the information being different, but the disclosure is not necessarily limited thereto.

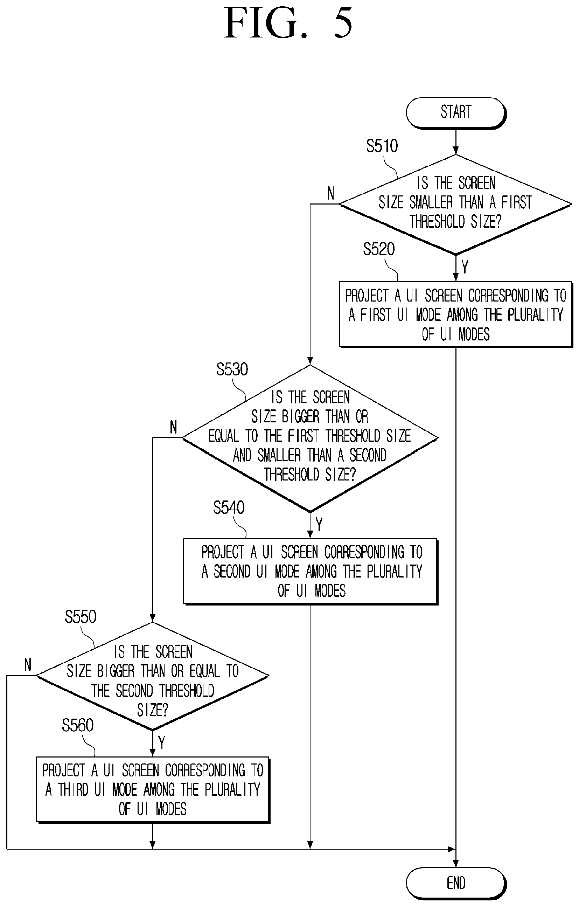

FIG. 5 is a flowchart illustrating an example method of providing a UI screen according to various embodiments.

According to the embodiment illustrated in FIG. 5, if a size of a screen projected on a projection surface is smaller than a first threshold size in the step S510:Y, the processor 140 may control the image projection part 110 to project a UI screen corresponding to a first UI mode among the plurality of UI modes in step S520.

If the screen size is not smaller than the first threshold size in the step S510:N, the processor 140 may identify whether the screen size is bigger than or equal to the first threshold size and smaller than a second threshold size in step S530.

If the screen size is bigger than or equal to the first threshold size and smaller than the second threshold size in step S530:Y, the processor 140 may control the image projection part 110 to project a UI screen corresponding to a second UI mode among the plurality of UI modes in step S540.

If the screen size is bigger than or equal to the first threshold size and not smaller than the second threshold size, the processor 140 may identify whether the screen size is bigger than or equal to the second threshold size in step S550.

If the screen size is bigger than or equal to the second threshold size in step S550:Y, the processor 140 may control the image projection part 110 to project a UI screen corresponding to a third UI mode among the plurality of UI modes in step S560.

For example, the first UI mode may be specified as a small screen mode, the second UI mode may be specified as a medium screen mode, and the third UI mode may be specified as a big screen mode, but the disclosure is not necessarily limited thereto.

According to an embodiment, the number of UI elements provided in the second UI mode may be more than the number of UI elements provided in the first UI mode and fewer than the number of UI elements provided in the third UI mode. Here, the number of UI elements may include the number of UI elements of the same type and/or the number of UI elements of different types. For example, in case the second UI mode includes N UI elements of the same type, the first UI mode may include N-a UI elements, and the third UI mode may include N+b UI elements. Also, for example, in case the second UI mode includes M UI elements of the same type/different types, the first UI mode may include M-c UI elements, and the third UI mode may include M+d UI elements. Here, N and M may be the same or different, and a, b, c, and d may be the same or different.

According to an embodiment, the number of types of UI elements provided in the second UI mode may be more than the number of types of UI elements provided in the first UI mode and fewer than the number of types of UI elements provided in the third UI mode. For example, in case four different types of UI elements are included in the second UI mode, three different types of UI elements may be included in the first UI mode, and five different types of UI elements may be included in the third UI mode.

According to an embodiment, the range of information provided in the second UI mode may be more enlarged than a range of information provided in the first UI mode and may be more reduced than a range of information provided in the third UI mode. The feature that a range of information is enlarged may include a case wherein there is a great amount of information and/or a case wherein the depth of information is deep. The feature that a range of information is reduced may include a case wherein there is a small amount of information and/or a case wherein the depth of information is shallow.

According to an embodiment, the number of UI elements provided in the second UI mode may be more than the number of UI elements provided in the first UI mode and identical to the number of UI elements provided in the third UI mode. However, in this case, the range of information provided in the third UI mode may be more enlarged than the range of information provided in the second UI mode.

According to an embodiment, the number of UI elements provided in the second UI mode may be identical to the number of UI elements provided in the first UI mode and fewer than the number of UI elements provided in the third UI mode. However, in this case, the range of information provided in the second UI mode may be more enlarged than the range of information provided in the first UI mode.

As in the aforementioned examples, the first UI mode, the second UI mode, and the third UI mode should be different in at least one of the number of UI elements, the number of types of UI elements, or a range of provided information, and the number of UI elements and/or the range of provided information may be increased or enlarged in the order of the first UI mode < the second UI mode < the third UI mode.

For example, the UI screens provided in the second UI mode and the third UI mode may include content promotion information that is not included in the UI screen provided in the first UI mode. For example, the UI screen provided in the third UI mode may further include a live content image and information related to the image that are not provided in the first UI mode and the second UI mode. For example, the UI screen provided in the third UI mode may include only icon information corresponding to side menus, and the UI screen provided in the third UI mode may include icon information corresponding to the side menus and menu titles.

According to an embodiment, the first threshold size of the screen for identifying the first UI mode, the second UI mode, and the third UI mode may be 55", and the second threshold size may be 100", but the numerical values are merely an example, and the disclosure is not limited thereto. For example, numerical values may vary according to the structure and the area of a projection surface, and the ambient environment (the lighting, the brightness, etc.). According to the type of a UI screen, numerical values corresponding to the first threshold size and the second threshold size may vary.

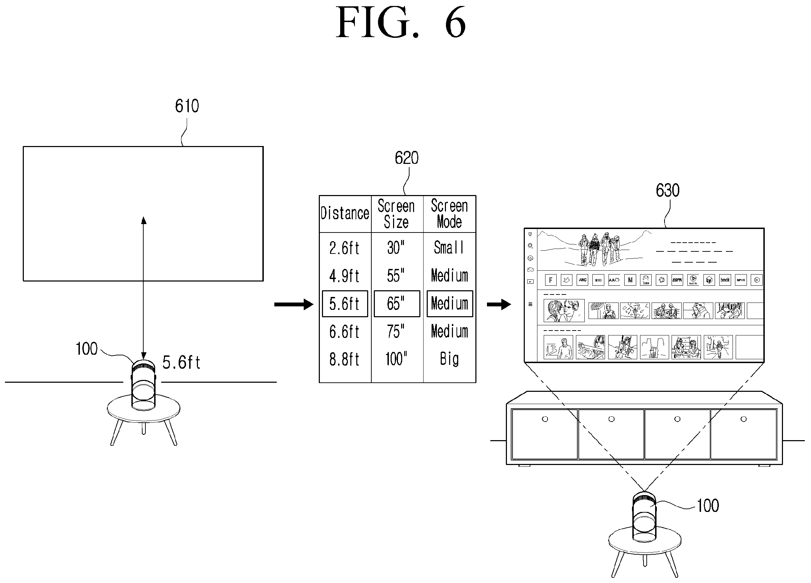

FIG. 6 is a diagram illustrating an example method by which a UI mode is determined according to a projection distance according to various embodiments.

According to the embodiment illustrated in FIG. 6, the electronic device 100 may identify a distance to the projection surface 610. For example, a case wherein the distance to the projection surface 610 was identified as 5.6ft will be assumed.

The electronic device 100 may identify a screen size corresponding to the identified projection distance, e.g., 5.6ft. For example, as illustrated in FIG. 6, screen size information corresponding to identified distances may be stored in the memory 130 in the form of a table 620. However, this is merely an example, and it is also possible that a screen size corresponding to an identified projection distance is calculated based on a formula, an algorithm, etc. In the table 620 illustrated in FIG. 6, it was illustrated that only screen sizes corresponding to specific distances are included, but this is only for the convenience of explanation. For example, a range of consecutive screen sizes corresponding to a range of consecutive distances may be stored in the form of a table, or a formula, an algorithm, etc. for identifying a screen size corresponding to a certain distance may be stored.

The electronic device 100 may identify a UI mode corresponding to the identified screen size. For example, as illustrated in FIG. 6, UI mode information corresponding to screen sizes may be stored in the memory 130 in the form of a table 620. In the table 620 illustrated in FIG. 6, it was illustrated that only screen size and UI mode information corresponding to specific distances is included, but this is only for the convenience of explanation. For example, as explained in FIG. 6, information on UI modes corresponding to a range of consecutive screen sizes may be stored.

When a UI mode is identified, the electronic device 100 may project a UI screen 630 corresponding to the UI mode on the projection surface. For example, in case the plurality of UI modes include a small screen mode, a medium screen mode, and a big screen mode, and the medium screen mode among them was identified, the UI screen 630 corresponding to the UI mode may be projected on the projection surface.

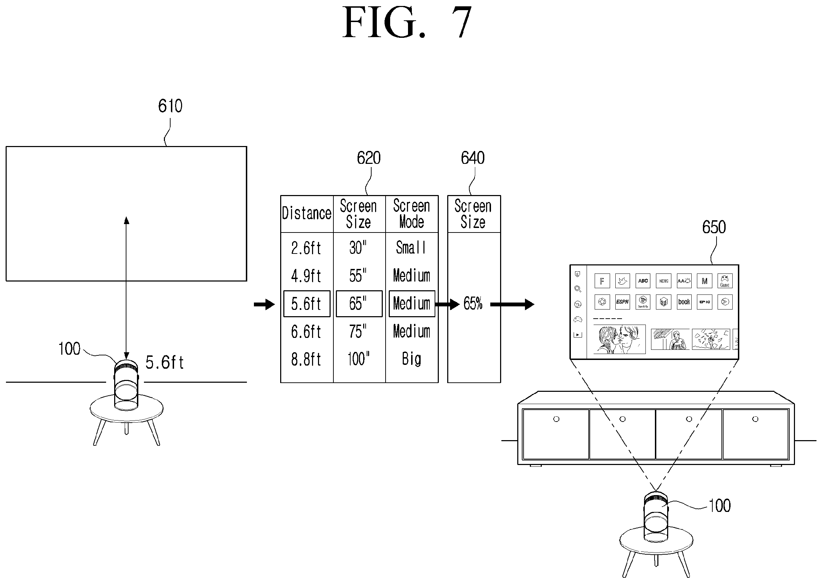

FIG. 7 is a diagram illustrating an example method by which a UI mode is determined according to a projection distance and an adjustment value of a screen size according to various embodiments.

In FIG. 6, an example wherein a UI mode is determined based on a distance to a projection surface was explained, but according to an embodiment, there may be a case wherein the user adjusts a screen size.

For example, as illustrated in FIG. 7, a case 640 wherein a UI mode corresponding to the identified screen size was identified as the medium screen mode, but the screen size was adjusted to be reduced to 65% according to the screen adjustment value of the user will be assumed. In this case, the UI mode may be identified as the small screen mode based on the screen size that was adjusted to be reduced. Accordingly, the electronic device 100 may project a UI screen 650 corresponding to the small screen mode on the projection surface.

However, according to an embodiment, there may be a case wherein an automatic zoom-in/out function is being executed. The automatic zoom-in/out function may be a function of automatically enlarging or reducing an image according to a distance to a projection surface. The automatic zoom-in/out function may include a hardware method of adjusting the size of the screen by moving a lens, and a software method of adjusting the size of the screen by cropping an image, etc. When the automatic zoom-in/out function is executed, it is necessary to adjust the focus of an image. For example, methods of adjusting a focus may include a manual focusing method, an electric method, etc.

In case such an automatic zoom-in/out function is being executed, the processor 140 may adjust a projection surface to a size appropriate for the plurality of UI modes. For example, after the second UI mode (e.g., the medium screen mode) was identified based on a projection surface, in case a user instruction for enlarging the screen size to 130% based on the screen size of 100% corresponding to the second UI mode was received, if a screen size of 125% is identified as a screen size appropriate for providing the second UI mode, the processor 140 may automatically adjust the screen size to 125%, and then project a UI screen corresponding to the second UI mode. The processor 140 may provide a guide UI guiding to adjust the size to 125%. For example, the processor 140 may identify that the screen size of 125% is a screen size appropriate for providing the second UI mode in consideration of the focus, the sharpness of the UI elements, the ambient environment (an obstacle existing on the projection surface, etc.), and the like.

According to an embodiment, UI screens corresponding to various types of UI homes may be provided on a projection surface, and according to the type of a UI home, at least a part of a UI screen according to the provided UI mode may be different. For example, the processor 140 may determine at least one of the number of UI elements provided on the UI screens corresponding to the plurality of UI modes or the range of provided information to be different based on the characteristics of the UI screens corresponding to each home. For example, the processor 140 may identify priorities of a plurality of types of UI elements of UI screens and priorities of provided information according to the types of UI homes, and render the UI screens corresponding to each of the plurality of UI modes based on the identified priorities and provide the screens.

According to an embodiment, the types of UI homes may include at least one of a media home, a game home, an ambient home, or a third party home, but this is merely an example, and various types of UI homes can be provided according to manufacturers. However, hereinafter, explanation will be described based on the assumption of a case wherein the types of UI homes include a media home, a game home, an ambient home, and a third party home.

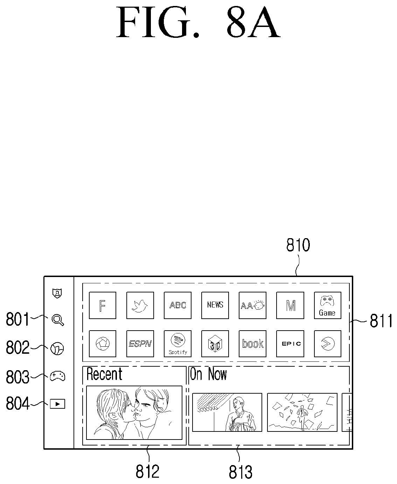

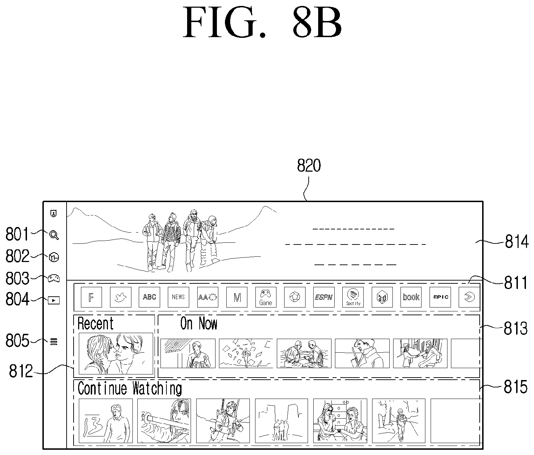

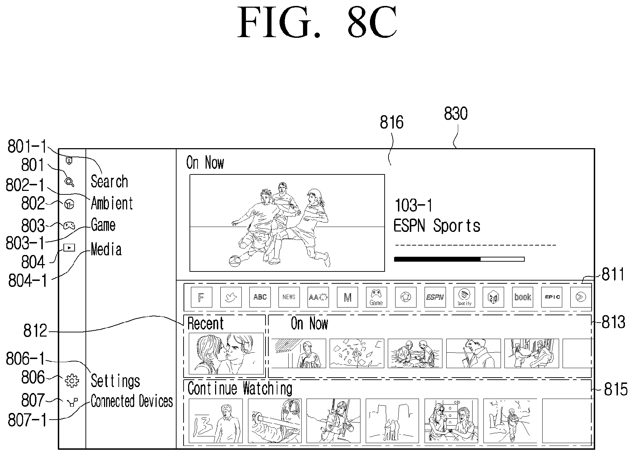

FIGS. 8A, 8B and 8C are diagrams illustrating a plurality of UI modes corresponding to a UI home of a first type according to various embodiments.

FIGS. 8A, 8B and 8C are diagrams illustrating a plurality of UI modes corresponding to a UI home of a first type, e.g., a media home.

FIG. 8A is a diagram illustrating an example of a UI screen corresponding to the first UI mode, and according to an embodiment, the processor 140 may provide the UI elements in bigger than or equal to a threshold size such that the size is not seen to be too small to the user, while providing minimal types of information without providing too many types of information in consideration of the screen size corresponding to the first UI mode. For example, as illustrated in FIG. 8A, the processor 140 may make information focused on apps and content thumbnails provided.

As illustrated in FIG. 8A, the media home screen 810 provided in the first UI mode may include icons 801 to 804 corresponding to the side menus, and UI elements 811, 812, 813 corresponding to the contents provided on the media home screen. For example, the icons 801 to 804 corresponding to the side menus may include a search menu 801, and menus 802, 803, 804 for selecting the UI home types. For example, the UI elements 811, 812, 813 corresponding to the contents may include a UI element 811 corresponding to media app contents, a UI element 812 corresponding to a content that was recently viewed, and a UI element 813 corresponding to real time broadcasting contents.

FIG. 8B is a diagram illustrating an example of a UI screen corresponding to the second UI mode, and according to an embodiment, the processor 140 may provide information of a relatively bigger number and/or types as the screen size corresponding to the second UI mode is relatively bigger than the screen size corresponding to the first UI mode.

As illustrated in FIG. 8B, the media home screen 820 provided in the second UI mode may include a search menu 801, menus 802, 803, 804 for selecting UI home types, a see more menu 805, and UI elements 811, 812, 813, 814, 815 corresponding to the contents provided on the media home screen.

For example, the UI elements 811, 812, 813, 814, 815 corresponding to the contents may include a UI element 811 corresponding to media apps, a UI element 812 corresponding to a content that was recently viewed, a UI element 813 corresponding to real time broadcasting contents, a UI element 814 corresponding to an advertising content, and a UI element 815 corresponding to contents for continuous viewing. That is, the media home screen 820 provided in the second UI mode as illustrated in FIG. 8B may further include additional information compared to the media home screen 810 provided in the first UI mode as illustrated in FIG. 8A. For example, the media home screen 820 provided in the second UI mode may additionally further include the see more menu 805, the UI element 814 corresponding to an advertising content, and the UI element 815 corresponding to contents for continuous viewing compared to the media home screen 810 provided in the first UI mode. For example, the processor 140 may additionally provide content promotion information, etc. through searched images while providing app and content thumbnail information in a relatively bigger number in the second UI mode than in the first UI mode.

FIG. 8C is a diagram illustrating an example of a UI screen corresponding to the third UI mode, and according to an embodiment, the processor 140 may provide information of a relatively bigger number and/or types as the screen size corresponding to the third UI mode is relatively bigger than the screen size corresponding to the second UI mode.

As illustrated in FIG. 8C, the media home screen 830 provided in the third UI mode may include a search menu 801, menus 802, 803, 804 for selecting UI home types, a setting menu 806, a connected device menu 807, and UI elements 811, 812, 813, 815, 816 corresponding to the contents provided on the media home screen.

For example, the UI elements 811, 812, 813, 815, 816 corresponding to the contents may include a UI element 811 corresponding to media apps, a UI element 812 corresponding to a content that was recently viewed, a UI element 813 corresponding to real time broadcasting contents, a UI element 815 corresponding to contents for continuous viewing, and detailed information 816 of a broadcasting content corresponding to the currently selected channel. For example, the media home screen 830 provided in the third UI mode as illustrated in FIG. 8C may further include additional information compared to the media home screen 820 provided in the second UI mode as illustrated in FIG. 8B. For example, the media home screen 830 provided in the third UI mode may additionally further include the setting menu 806 and the connected device menu 807 which are sub menus of the see more menu 805, titles (or descriptions) for each menu 801-1 to 807-1, and the detailed information 816 of a broadcasting content corresponding to the currently selected channel among real time broadcasting contents compared to the media home screen 820 provided in the second UI mode.

In the UI screen 830 illustrated in FIG. 8C, it was illustrated that the UI element 814 corresponding to an advertising content that is included in the UI screen 820 illustrated in FIG. 8B is not included. However, the disclosure is not limited thereto, and the UI screen 830 may include the UI element 814 corresponding to an advertising content, and may further include the detailed information 816 of a broadcasting content corresponding to the currently selected channel among real time broadcasting contents. According to an embodiment, the processor 140 may provide information of a relatively bigger number and/or types as the screen size corresponding to the third UI mode is relatively bigger than the screen size corresponding to the second UI mode. That is, in the third UI mode, side menus in an activated state are provided, and thus the user can check the menu titles at once. Also, through the real time broadcasting contents and the corresponding detailed information, the user can check information related to a viewed image while maintaining the live viewing experience.

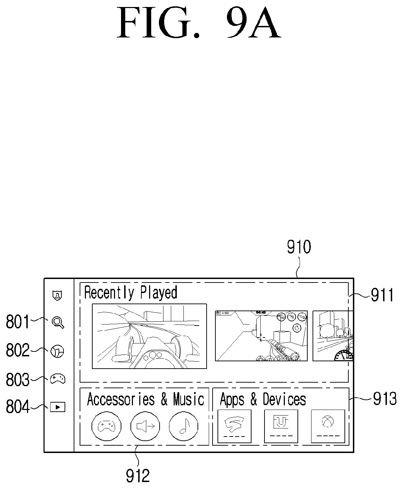

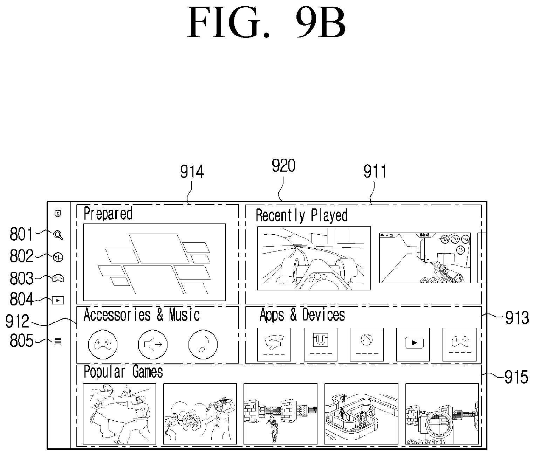

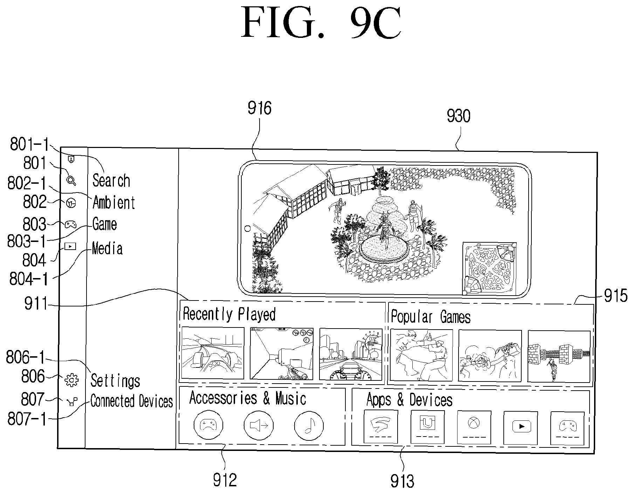

FIGS. 9A, 9B and 9C are diagrams illustrating a plurality of UI modes corresponding to a UI home of a second type according to various embodiments.

FIGS. 9A, 9B and 9C are diagrams illustrating a plurality of UI modes corresponding to a UI home of a second type, e.g., a game home.

FIG. 9A is a diagram illustrating an example of a UI screen corresponding to the first UI mode, and according to an embodiment, the processor 140 may provide the UI elements in bigger than or equal to the threshold size such that the size is not seen to be too small to the user, while providing minimal types of information without providing too many types of information in consideration of the screen size corresponding to the first UI mode. For example, as illustrated in FIG. 9A, the processor 140 may make information focused on apps and content thumbnails provided.

As illustrated in FIG. 9A, the game home screen 910 provided in the first UI mode may include icons 801 to 804 corresponding to the side menus, and UI elements 911, 912, 913 corresponding to the contents provided on the game home screen. For example, the UI elements 911, 912, 913 corresponding to the contents may include a UI element 911 corresponding to game contents that were recently played, a UI element 912 corresponding to accessory and music contents related to games, and a UI element 913 corresponding to apps and devices related to games.

FIG. 9B is a diagram illustrating an example of a UI screen corresponding to the second UI mode, and according to an embodiment, the processor 140 may provide information of a relatively bigger number and/or types as the screen size corresponding to the second UI mode is relatively bigger than the screen size corresponding to the first UI mode.

As illustrated in FIG. 9B, the game home screen 920 provided in the second UI mode may further include the see more menu 805, a UI element 914 corresponding to an advertising content, e.g., a game that will soon be released, and a UI element 915 corresponding to a popular game compared to the game home screen 910 provided in the first UI mode. That is, the processor 140 may additionally provide content promotion information, etc. through searched images while providing app and content thumbnail information in a relatively bigger number in the second UI mode than in the first UI mode. Here, the UI element 914 corresponding to a "prepared" content may be replaced by a UI element corresponding to a "sponsored" content.

FIG. 9C is a diagram illustrating an example of a UI screen corresponding to the third UI mode, and according to an embodiment, the processor 140 may provide information of a relatively bigger number and/or types as the screen size corresponding to the third UI mode is relatively bigger than the screen size corresponding to the second UI mode.

As illustrated in FIG. 9C, the media home screen 930 provided in the third UI mode may additionally further include the setting menu 806 and the connected device menu 807 which are sub menus of the see more menu 805, titles (or descriptions) for each menu 801-1 to 807-1, and information 916 on a game content played in real time compared to the media home screen 920 provided in the second UI mode as illustrated in FIG. 9B.

In the UI screen 930 illustrated in FIG. 9C, it was illustrated that the UI element 914 corresponding to an advertising content that is included in the UI screen 920 illustrated in FIG. 9B is not included. However, the disclosure is not limited thereto, and the UI screen 930 may include the UI element 914 corresponding to an advertising content, and may further include the information 916 on a game content played in real time.

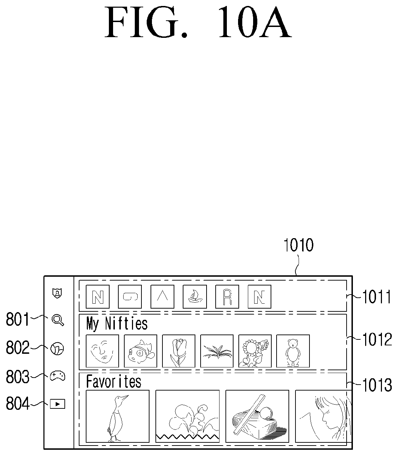

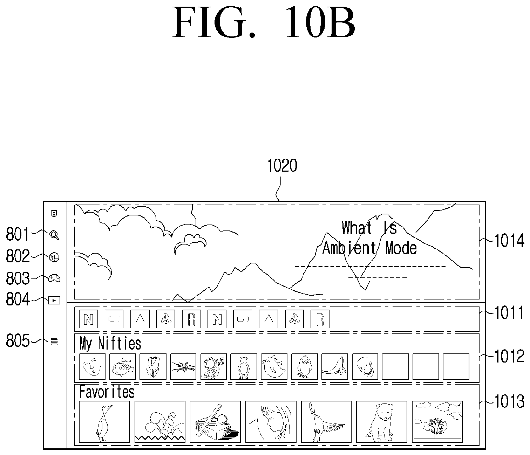

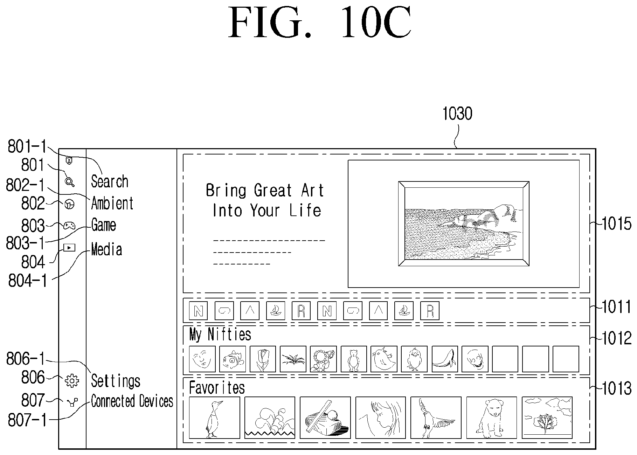

FIGS. 10A, 10B and 10C are diagrams illustrating a plurality of UI modes corresponding to a UI home of a third type according to various embodiments.

FIGS. 10A, 10B and 10C are diagrams illustrating a plurality of UI modes corresponding to a UI home of a third type, e.g., an ambient home.

FIG. 10A is a diagram illustrating an example of a UI screen corresponding to the first UI mode, and according to an embodiment, the processor 140 may provide the UI elements in bigger than or equal to the threshold size such that the size is not seen to be too small to the user, while providing minimal types of information without providing too many types of information in consideration of the screen size corresponding to the first UI mode.

As illustrated in FIG. 10A, the ambient home screen 1010 provided in the first UI mode may include the icons 801 to 804 corresponding to the side menus, and UI elements 1011, 1012, 1013 corresponding to the contents provided on the ambient home screen. For example, the UI elements 1011, 1012, 1013 corresponding to the contents may include a UI element 1011 corresponding to an app related to art contents, a UI element 1012 corresponding to art contents purchased (or owned) by the user in advance, and a UI element 1013 corresponding to preferred art contents of the user.

FIG. 10B is a diagram illustrating an example of a UI screen corresponding to the second UI mode, and according to an embodiment, the processor 140 may provide information of a relatively bigger number and/or types as the screen size corresponding to the second UI mode is relatively bigger than the screen size corresponding to the first UI mode.

As illustrated in FIG. 10B, the ambient home screen 1020 provided in the second UI mode may further include the see more menu 805, and a UI element 1014 corresponding to an advertising content, e.g., promotion for the ambient mode compared to the ambient home screen 1010 provided in the first UI mode. For example, the processor 140 may additionally provide content promotion information, etc. through rich images while providing app and content thumbnail information in a relatively bigger number in the second UI mode than in the first UI mode.

FIG. 10C is a diagram illustrating an example of a UI screen corresponding to the third UI mode, and according to an embodiment, the processor 140 may provide information of a relatively bigger number and/or types as the screen size corresponding to the third UI mode is relatively bigger than the screen size corresponding to the second UI mode.

As illustrated in FIG. 10C, the ambient home screen 1030 provided in the third UI mode may additionally further include the setting menu 806 and the connected device menu 807 which are sub menus of the see more menu 805, titles (or descriptions) for each menu 801-1 to 807-1, and more detailed promotion information 1015 related to the contents provided in the ambient mode compared to the ambient home screen 1020 provided in the second UI mode as illustrated in FIG. 10B.

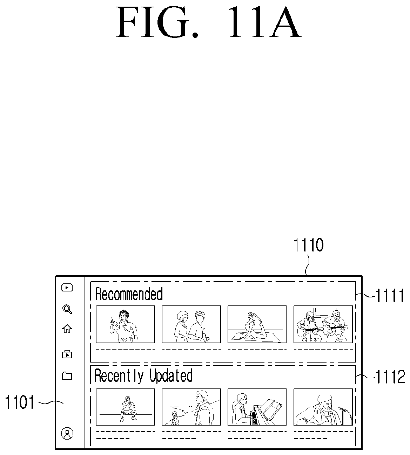

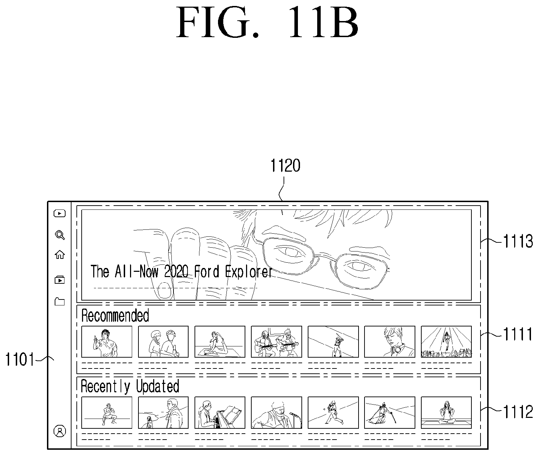

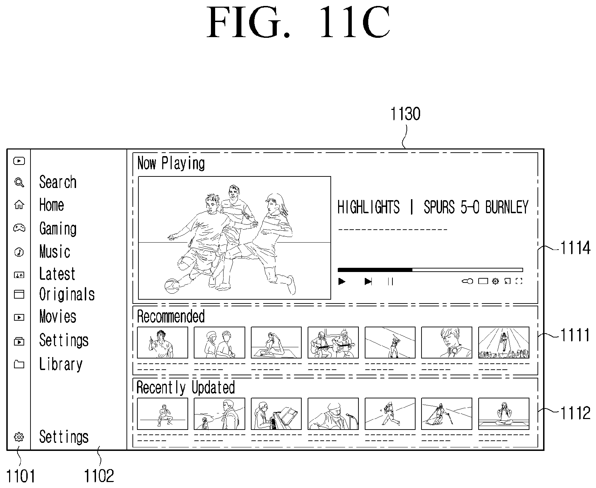

FIGS. 11A, 11B and 11C are diagrams illustrating a plurality of UI modes corresponding to a UI home of a fourth type according to various embodiments.

FIGS. 11A, 11B and 11C are diagrams illustrating a plurality of UI modes corresponding to a UI home of a fourth type, e.g., a third party home.

FIG. 11A is a diagram illustrating an example of a UI screen corresponding to the first UI mode, and the third party home screen 1110 provided in the first UI mode may include an icon 1101 corresponding to a side menu provided by a specific third party (e.g. YouTube), and UI elements 1111, 1112 corresponding to contents. For example, the UI elements 1111, 1112 corresponding to contents may include a UI element 1111 corresponding to recommended contents and a UI element 1112 corresponding to recently updated contents.

FIG. 11B is a diagram illustrating an example of a UI screen corresponding to the second UI mode, and according to an embodiment, the processor 140 may provide information of a relatively bigger number and/or types as the screen size corresponding to the second UI mode is relatively bigger than the screen size corresponding to the first UI mode. For example, the UI screen 1120 corresponding to the second UI mode may further include promotion information 1113 compared to the home screen 1110 provided in the first UI mode.

FIG. 11C is a diagram illustrating an example of a UI screen corresponding to the third UI mode, and according to an embodiment, the processor 140 may provide information of a relatively bigger number and/or types as the screen size corresponding to the third UI mode is relatively bigger than the screen size corresponding to the second UI mode. For example, the UI screen 1130 corresponding to the third UI mode may further include menu icons 1101 in a bigger number, title information for each menu 1102, and information 1114 on a content played in real time compared to the home screen 1120 provided in the second UI mode.

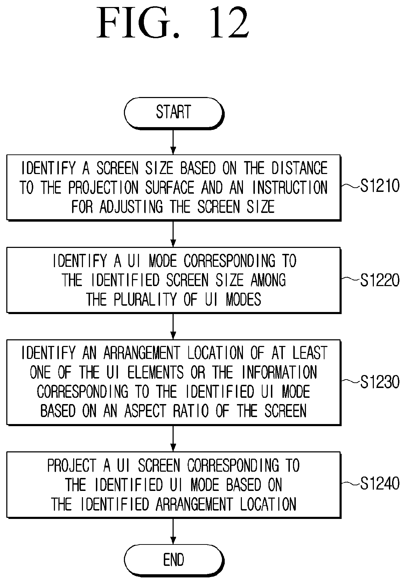

FIG. 12 is a flowchart illustrating an example method of providing a UI according to various embodiments.

According to the embodiment illustrated in FIG. 12, if a screen size is identified based on a distance to a projection surface and/or an instruction for adjusting the screen size in step S1210, the processor 140 may identify a UI mode corresponding to the identified screen size among a plurality of UI modes in step S1220. The plurality of UI modes may be in forms wherein at least one of the number of UI elements provided on the UI screen or a range of provided information is different.

The processor 140 may identify an arrangement location of at least one of the UI elements or the information corresponding to the identified UI mode based on an aspect ratio of the screen in step S1230.

According to an embodiment, an aspect ratio of a screen may be diverse according to a user instruction. For example, an aspect ratio of a screen may include various aspect ratios such as 21:9, 16:9, 4:3, etc. In this case, the processor 140 may include a UI screen by arranging the UI elements of the number identified based on the screen size and/or the information of the type identified based on the screen size in different locations according to the aspect ratio of the screen. For example, the first UI element and the second UI element may be arranged in a horizontal direction on a screen in the first aspect ratio, and may be arranged in a vertical direction on a screen in the second aspect ratio.

The processor 140 may control the image projection part 110 to project a UI screen corresponding to the identified UI mode based on the identified arrangement location in step 1240.

According to the aforementioned various example embodiments, in a situation wherein a UI screen is projected on a projection surface, a UI screen having appropriate usability can be provided according to the screen size, and thus the user's convenience can be improved.

The methods according to the aforementioned various embodiments of the disclosure may be implemented in forms of applications that can be installed on conventional electronic devices. The methods according to the aforementioned various example embodiments of the disclosure may be performed using an artificial neural network based on deep learning (or a deep artificial neural network), e.g., a learning network model.

The methods according to the aforementioned various embodiments of the disclosure may be implemented just with software upgrade, or hardware upgrade of conventional electronic devices.

The aforementioned various example embodiments of the disclosure may be performed through an embedded server provided on an electronic device, or an external server of an electronic device.

According to an embodiment of the disclosure, the aforementioned various example embodiments may be implemented as software including instructions stored in machine-readable storage media, which can be read by machines (e.g.: computers). The machines refer to devices that call instructions stored in a storage medium, and can operate according to the called instructions, and the devices may include an electronic device according to the aforementioned embodiments (e.g.: an electronic device A). In case an instruction is executed by a processor, the processor may perform a function corresponding to the instruction by itself, or using other components under its control. An instruction may include a code that is generated or executed by a compiler or an interpreter. A storage medium readable by machines may be provided in the form of a non-transitory storage medium. Here, the 'non-transitory' storage medium may not include signals and is tangible, and the term does not distinguish a case wherein data is stored in the storage medium semi-permanently and a case wherein data is stored temporarily.

According to an embodiment of the disclosure, the methods according to the aforementioned various embodiments may be provided while being included in a computer program product. A computer program product refers to a product, and it can be traded between a seller and a buyer. A computer program product can be distributed in the form of a storage medium that is readable by machines (e.g.: compact disc read only memory (CD-ROM)), or distributed on-line through an application store (e.g.: Play Store^{™}). In the case of on-line distribution, at least a portion of a computer program product may be stored in a storage medium such as the server of the manufacturer, the server of the application store, and the memory of the relay server at least temporarily, or may be generated temporarily.

In addition, each of the components according to the aforementioned various embodiments (e.g.: a module or a program) may include a singular object or a plurality of objects, and among the aforementioned corresponding sub components, some sub components may be omitted, or other sub components may be further included in the various embodiments. Alternatively or additionally, some components (e.g.: a module or a program) may be integrated as an object, and perform functions performed by each of the components before integration identically or in a similar manner. Further, operations performed by a module, a program, or other components according to the various embodiments may be executed sequentially, in parallel, repetitively, or heuristically. Or, at least some of the operations may be executed in a different order or omitted, or other operations may be added.

Also, while preferred embodiments of the disclosure have been shown and described, the disclosure is not limited to the aforementioned specific embodiments, and it is apparent that various modifications may be made by those having ordinary skill in the technical field to which the disclosure belongs, without departing from the gist of the disclosure as claimed by the appended claims. Further, it is intended that such modifications are not to be interpreted independently from the technical idea or prospect of the disclosure.

## Claims

1. An electronic device comprising:
an image projection part;
a sensor;
memory storing at least one instruction; and
at least one processor that is connected with the image projection part, the sensor, and the memory, and controls the electronic device,
wherein the at least one processor is configured to, by executing the at least one instruction:
identify a screen size based on a distance to a projection surface obtained through the sensor,
identify a user interface (UI) mode corresponding to the identified screen size among a plurality of UI modes, and
control the image projection part to project a UI screen corresponding to the identified UI mode, and
wherein the plurality of UI modes are different in at least one of the number of UI elements provided on the UI screen, the number of types of UI elements, or a range of provided information.

2. The electronic device of claim 1,
wherein the at least one processor is configured to:
identify the screen size based on the distance to the projection surface and an instruction for adjusting the screen size, and
the instruction for adjusting the screen size includes a user instruction for enlarging or reducing the screen size.

3. The electronic device of claim 1,
wherein at least one processor, individually and/or collectively, is configured to:
based on the screen size being smaller than a first threshold size, control the image projection part to project a UI screen corresponding to a first UI mode among the plurality of UI modes,
based on the screen size being bigger than or equal to the first threshold size and smaller than a second threshold size, control the image projection part to project a UI screen corresponding to a second UI mode among the plurality of UI modes, and
based on the screen size being bigger than or equal to the second threshold size, control the image projection part to project a UI screen corresponding to a third UI mode among the plurality of UI modes.

4. The electronic device of claim 3,
wherein the number of UI elements provided in the second UI mode is greater than the number of UI elements provided in the first UI mode and less than the number of UI elements provided in the third UI mode, and
a range of information provided in the second UI mode is more enlarged than a range of information provided in the first UI mode and is more reduced than a range of information provided in the third UI mode.

5. The electronic device of claim 3,
wherein the UI screens provided in the second UI mode and the third UI mode comprise:
content promotion information not included in the UI screen provided in the first UI mode, and
the UI screen provided in the third UI mode further comprises:
a live content image and information related to the image not provided in the first UI mode and the second UI mode.

6. The electronic device of claim 3,
wherein the UI screens provided in the first UI mode and the second UI mode comprise:
icon information corresponding to side menus, and
the UI screen provided in the third UI mode comprises:
icon information corresponding to the side menus and menu titles.

7. The electronic device of claim 3,
wherein the number of types of UI elements provided in the second UI mode is greater than the number of types of UI elements provided in the first UI mode and less than the number of types of UI elements provided in the third UI mode.

8. The electronic device of claim 1,
wherein the at least one processor is configured to:
provide any one of a UI screen corresponding to a media home, a UI screen corresponding to a game home, a UI screen corresponding to an ambient home, or a UI screen corresponding to a third party home, and
based on characteristics of UI screens corresponding to each home, identify at least one of the number of the UI elements provided in the UI screens corresponding to the plurality of UI modes, the number of the types of the UI elements, or the range of the provided information to be different.

9. The electronic device of claim 1,
wherein the at least one processor is configured to:
identify priorities of a plurality of types of UI elements of UI screens and priorities of provided information, and
render the UI screens corresponding to each of the plurality of UI modes differently based on the identified priorities and provide the screens.

10. The electronic device of claim 1,
wherein the at least one processor is configured to:
based on identifying a UI mode corresponding to the identified screen size among the plurality of UI modes, identify an arrangement location of at least one of the UI elements or the information corresponding to the identified UI mode based on an aspect ratio of the screen, and
control the image projection part to project a UI screen corresponding to the identified UI mode based on the identified arrangement location.

11. A method of providing a user interface (UI) of an electronic device configured to project an image on a projection surface, the method comprising:
identifying a screen size based on a distance to the projection surface;
identifying a UI mode corresponding to the identified screen size among a plurality of UI modes; and
projecting a UI screen corresponding to the identified UI mode on the projection surface, and
wherein the plurality of UI modes are different in at least one of the number of UI elements provided on the UI screen, the number of types of UI elements, or a range of provided information.

12. The method of providing a UI of claim 11,
wherein the identifying the screen size comprises:
identifying the screen size based on the distance to the projection surface and an instruction for adjusting the screen size, and
the instruction for adjusting the screen size includes a user instruction for enlarging or reducing the screen size.

13. The method of providing a UI of claim 11,
wherein the projecting the UI screen on the projection surface comprises:
based on the screen size being smaller than a first threshold size, projecting a UI screen corresponding to a first UI mode among the plurality of UI modes;
based on the screen size being bigger than or equal to the first threshold size and smaller than a second threshold size, projecting a UI screen corresponding to a second UI mode among the plurality of UI modes; and
based on the screen size being bigger than or equal to the second threshold size, projecting a UI screen corresponding to a third UI mode among the plurality of UI modes.

14. The method of providing a UI of claim 13,
wherein the number of UI elements provided in the second UI mode is greater than the number of UI elements provided in the first UI mode and less than the number of UI elements provided in the third UI mode, and
a range of information provided in the second UI mode is more enlarged than a range of information provided in the first UI mode and is more reduced than a range of information provided in the third UI mode.

15. A non-transitory computer-readable medium storing computer instructions which, when executed by a processor of an electronic device that projects an image on a projection surface, make the electronic device perform operations,
wherein the operations comprise:
identifying a screen size based on a distance to the projection surface;
identifying a user interface (UI) mode corresponding to the identified screen size among a plurality of UI modes; and
projecting a UI screen corresponding to the identified UI mode on the projection surface, and
wherein the plurality of UI modes are different in at least one of the number of UI elements provided on the UI screen, the number of types of UI elements, or a range of
